# EUROPÄISCHE PATENTSCHRIFT

(11) **EP 0 370 213 B1**
(45) Veröffentlichungstag und Bekanntmachung des Hinweises auf die Patenterteilung: **28.12.1994**
(21) Anmeldenummer: 89118500.1
(22) Anmeldetag: 05.10.1989
(51) Int. Cl.: B65G 47/71

(54) **Verfahren und Vorrichtung zum Überführen von einbahnig zugeführten Gegenständen auf mehrere Abförderbahnen**
Method and apparatus for transferring articles supplied along a single track to several discharge conveying tracks
Procédé et dispositif de transfert d'articles d'un transporteur d'amenée à voie unique à un transporteur d'évacuation à plusieurs voies

(30) Priorität: 26.10.1988 DE 3836363
(43) Veröffentlichungstag der Anmeldung: 30.05.1990
(73) Patentinhaber: Focke & Co. (GmbH & Co.), 27283 Verden (DE)
(72) Erfinder: Focke, Heinz, D-27283 Verden (DE)
(74) Vertreter: Bolte, Erich, Dipl.-Ing.

(56) Entgegenhaltungen:
- EP-A- 0 122 065
- FR-A- 2 258 326
- GB-A- 2 141 990

## Beschreibung

Die Erfindung betrifft ein Verfahren zum Überführen von in einer fortlaufenden Reihe auf einer Zuförderbahn zugeförderten Gegenständen, insbesondere Zigaretten-Packungen, in mehrere, insbesondere zwei Abförderbahnen, wobei die ankommenden Gegenstände während vorzugsweise kontinuierlichen Transports längs einer kreisbogenförmigen, insbesondere etwa viertelkreisförmigen, Verteilerbahn durch unterschiedliches Verschieben quer zur Zuförderbahn den zugeordneten Abförderbahnen zugeführt werden, und wobei die Gegenstände während des Transports längs der Verteilerbahn zugleich seitwärts bewegt werden unter Ausrichtung auf die entsprechende Abförderbahn. Weiterhin betrifft die Erfindung eine Vorrichtung zur Durchführung dieses Verfahrens.

Im Zusammenhang mit Verpackungsmaschinen ergibt sich häufig die Notwendigkeit, in einer Reihe zugeförderte Gegenstände auf mehrere abführende Reihen aufzuteilen. Beispielsweise sind bei Verpackungsmaschinen für Zigaretten-Packungen, die von der Verpackungsmaschine in einer fortlaufenden Dichtreihe zugeführten Packungen auf zwei Abförderbahnen aufzuteilen, die dann einer weiteren Verarbeitung, zum Beispiel einer Außeneinschlagmaschine, zugeführt werden.

Dieser Aufteilungsvorgang ist so zu gestalten, daß der fortlaufende Förderfluß der Packungen nicht beeinträchtigt wird.

Aus der GB-A-2 141 990 ist eine Einrichtung zum Überführen einzelner Windeln von einer einzigen Zuförderbahn auf mehrere Abförderbahnen bekannt. Hierzu ist eine rotierende Verteilertrommel zwischengeschaltet, auf dessen Umfang während der Drehbewegung derselben in achsparalleler Richtung die Windein verschoben werden. Letztere werden einzeln, tangential an den Umfang der Verteilertrommel herangeführt und nacheinander entgegengesetzt in axialer Richtung bewegt. Die Abförderbahnen stehen etwa in einem Winkel von 90 ° zur Zuförderbahn.

Demgegenüber liegt der Erfindung die Aufgabe zugrunde, die Verteilung von einem Einzelstrang entnommenen Gegenständen auf mehrere abführende Stränge so zu gestalten, daß eine besonders hohe Förderleistung erzielt wird bei schonender Behandlung der Gegenstände.

Zur Lösung dieser Aufgabe ist das erfindungsgemäße Verfahren dadurch gekennzeichnet, daß gleichzeitig mehrere, insbesondere zwei Fördergegenstände der Zuförderbahn entnommen und im Bereich der kreisbogenförmigen Verteilerbahn in entgegengesetzten Richtungen quer bewegt werden bis zur Ausrichtung auf die Abförderbahnen.

Die erfindungsgemäße Vorrichtung ist dadurch gekennzeichnet, daß die Verteilertrommel Mittel aufweist zur Aufnahme von zwei in Radialrichtung nebeneinanderliegenden Gegenständen.

Die Zuförderbahn läuft etwa in der horizontalen Mittelebene der liegenden Verteilertrommel an deren Umgfang heran. Die Gegenstände werden sodann längs eines Viertelkreises in Abwärtsrichtung durch die Verteilertrommel gefördert und zur Ausrichtung auf die Abförderbahnen quer verschoben. Diese laufen etwa tangential an die Unterseite der Verteilertrommel heran.

Die Verteilertrommel ist so ausgebildet, daß gleichzeitig zwei Gegenstände einer Dichtreihe derselben im Bereich der Zuförderbahn entnommen und während der Drehung der Verteilertrommel achsparallel in entgegengesetzten Richtungen verschoben werden. Die Verteilertrommel ist zu diesem Zweck mit achsparallel hin- und herbewegbaren Schieberorganen ausgerüstet, je für einen Gegenstand. Die beiden gleichzeitig durch die Verteilertrommel geförderten Gegenstände liegen auf in Radialrichtung versetzten Schiebeebenen auf.

Bei der erfindungsgemäßen Vorrichtung werden quaderförmige Gegenstände während der Aufteilung auf die Abförderbahnen zugleich um 90 ° gewendet, zum Beispiel aus einer aufrechten Position im Bereich der Zuförderbahn in eine liegende Stellung im Bereich der Abförderbahnen.

Weitere Merkmale der Erfindung betreffen die Ausbildung der Verteilertrommel sowie dieser zugeordneter Förderorgane.

Ausführungsbeispiele der Erfindung werden nachfolgend anhand der Zeichnung näher beschrieben. Es zeigen:

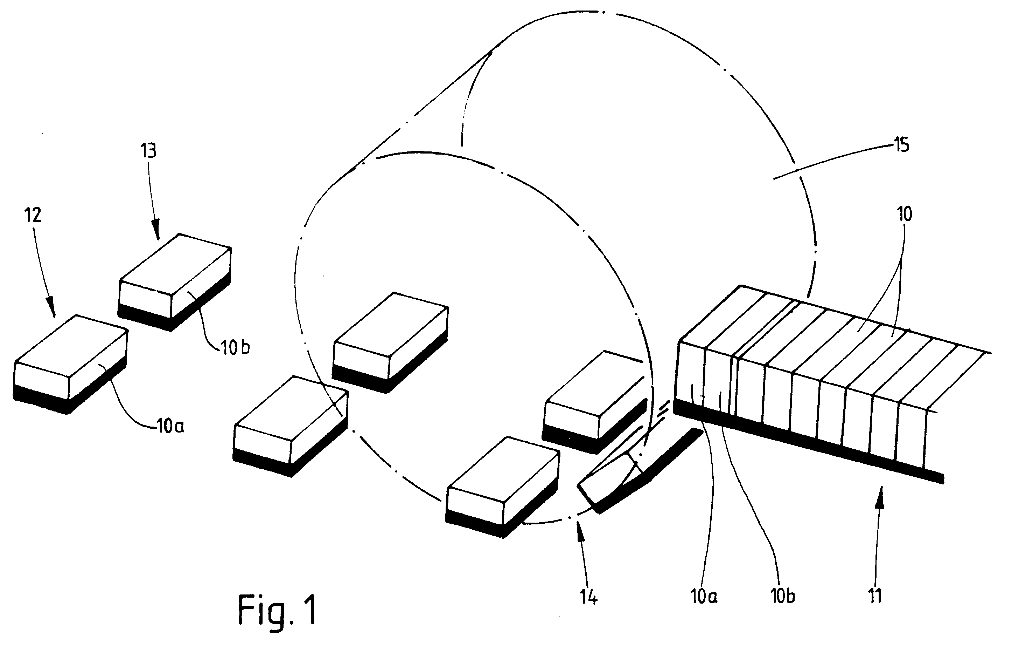

- Fig. 1: eine vereinfachte, perspektivische Darstellung der Förderbahnen einer ersten Ausführungsform der Erfindung,

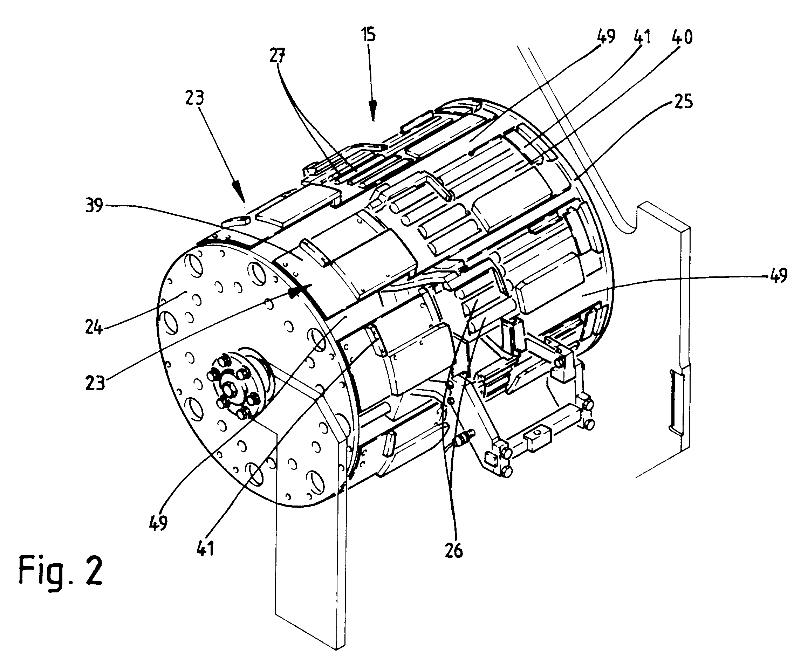

- Fig. 2: eine Verteilertrommel als Einzelheit der Vorrichtung in vereinfachter perspektivischer Darstellung,
- Fig. 3: eine Seitenansicht bzw. einen Vertikalschnitt der Verteilertrommel mit zugeordneten Förderorganen,
- Fig. 4: einen Vertikalschnitt der Verteilertrommel im Bereich der mittleren Vertikalebene,
- Fig. 5: einen Horizontalschnitt eines Teils der Verteilertrommel mit Zuführförderer, in vergrößertem Maßstab,

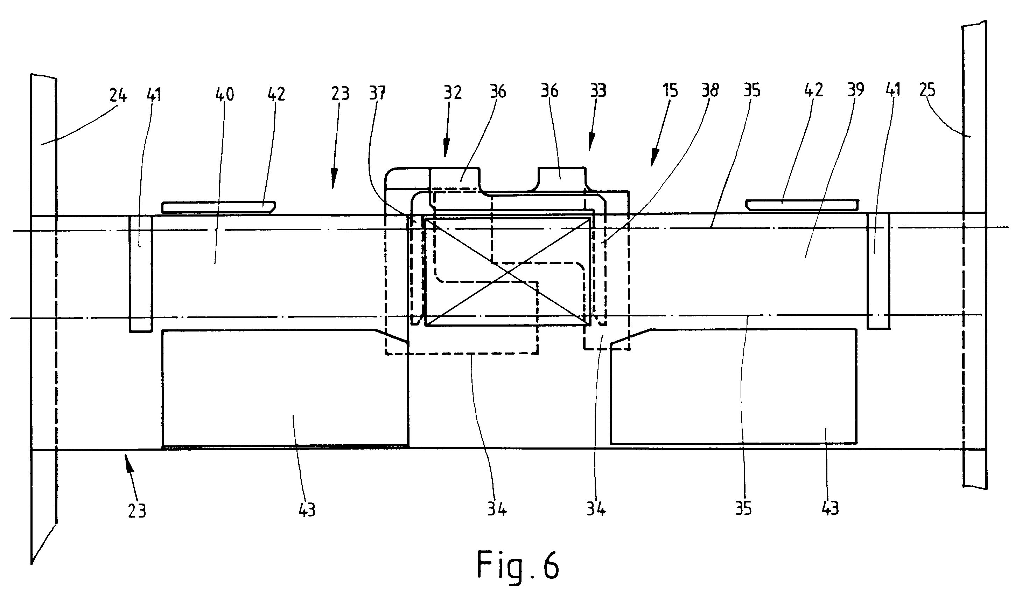

- Fig. 6: eine Einzelheit der Verteilertrommel in Draufsicht, in nochmals vergrößertem Maßstab,

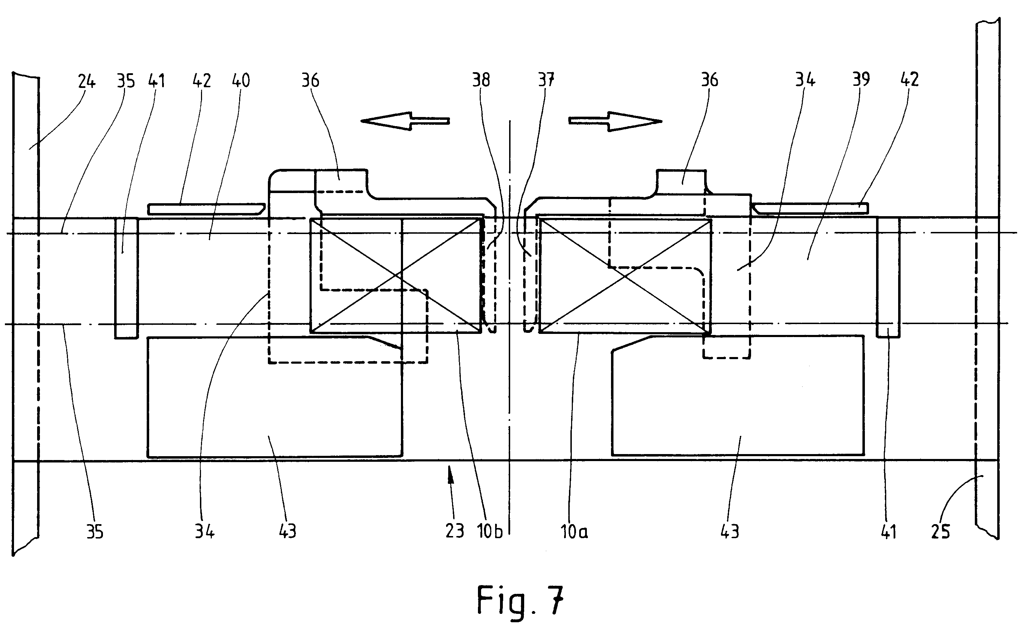

- Fig. 7: die Einzelheit gemäß Fig. 6 bei veränderter Relativstellung von Schieberorganen,
- Fig. 8: einen Ausschnitt der Verteilertrommel im Vertikalschnitt in einer zu Fig. 3 versetzten Ebene,
- Fig. 9: die Verteilertrommel in einer Darstellung entsprechend Fig. 8 bei veränderter Drehstellung,
- Fig. 10: der Verteilertrommel zugeordnete Nachlegeschächte für Gegenstände, in perspektivischer Darstellung,
- Fig. 11: eine vereinfachte Darstellung von Förderbahnen einer zweiten Ausführungsform der Erfindung mit Umlenkung im Bereich der Abförderbahnen.

Bei den gezeigten Ausführungsbeispielen geht es um die Handhabung von quaderförmigen (Zigaretten-)Packungen, insbesondere des Typs Hinge-Lid, im Bereich einer Verpackungsanlage. Auf einer Zuförderbahn 11 kommen die Gegenstände, nämlich Packungen 10, in einer Dichtreihe z. B. von einer Verpackungsmaschine (nicht gezeigt). Die Packungen sollen bei den gezeigten Beispielen einer Außeneinschlagmaschine zugeführt werden. Zu diesem Zweck sind die Packungen 10 der einzelnen Zuförderbahn 11 im vorliegenden Falle auf zwei parallele, gleichgerichtete Abförderbahnen 12 und 13 zu verteilen. Dabei werden die Packungen 10 gleichzeitig aus einer aufrechten Stellung im Bereich der Zuförderbahn 11 in eine liegende Position im Bereich der Abförderbahnen 12, 13 gewendet und mit Abständen voneinander weitergefördert. Die Zuförderbahn 11 ist im vorliegenden Fall mittig zu den Abförderbahnen 12 und 13 angeordnet, so daß die Packungen 10 nach beiden Seiten querbewegt werden zur Übergabe an die Abförderbahnen 12 und 13.

Diese Zuführbewegung erfolgt im Bereich einer Verteilerbahn 14, die hier kreisbogenförmig, genauer viertelkreisförmig, ausgebildet ist. Während einer gegenüber der Zuförderbahn 11 nach unten gerichteten Förderbewegung werden die Packungen 10 paarweise in entgegengesetzten Richtungen auseinanderbewegt, also quer zur Zuförderbahn 11, bis sie auf die mit entsprechendem Abstand voneinander angeordneten Förderbahnen 12, 13 ausgerichtet sind.

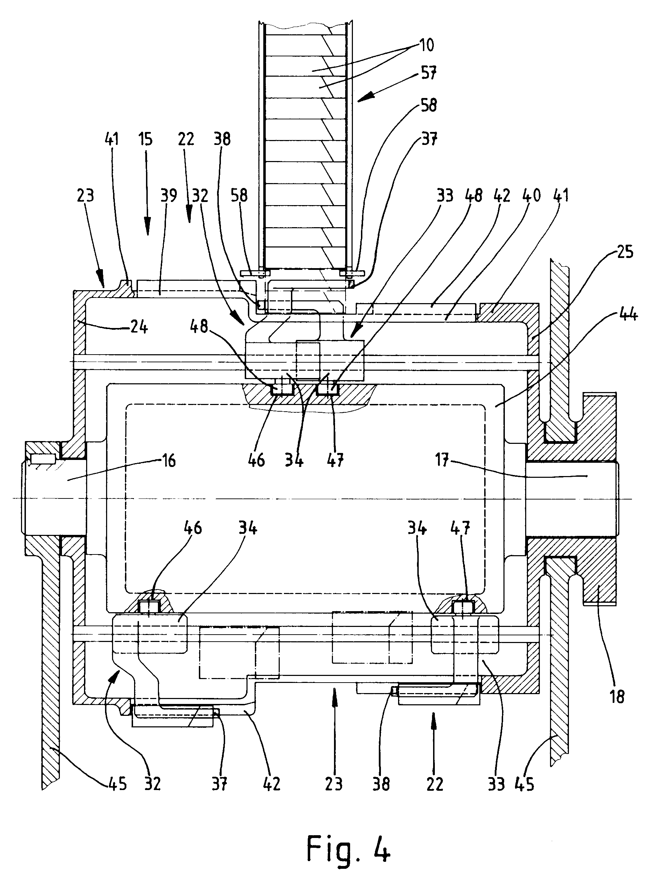

Zentrales Förderorgan ist eine Verteilertrommel 15. Diese ist als Hohlkörper auf Achszapfen 16, 17 (Fig. 4) drehbar gelagert mit horizontaler, quer zur Zuförderbahn 11 gerichteter Drehachse. Der vorzugsweise kontinuierliche Drehantrieb der Verteilertrommel 15 erfolgt durch ein Antriebszahnrad 18.

Die Verteilertrommel 15 ist so angeordnet, daß die Packungen 10 durch die Zuförderbahn 11 etwa in Höhe einer horizontalen Mittelebene der Verteilertrommel 15 an deren Umfang herangefördert werden. Die Zuförderbahn 11 wird durch einen Oberförderer 19 und einen Unterförderer 20 gebildet, jeweils als Gurtförderer. Diese enden mit einem Abstand vom Umfang der Verteilertrommel 15. Eine feststehende Brücke 21 führt vom Umlenkende des Unterförderers 20 bis nahezu an den Umfang der Verteilertrommel 15 heran.

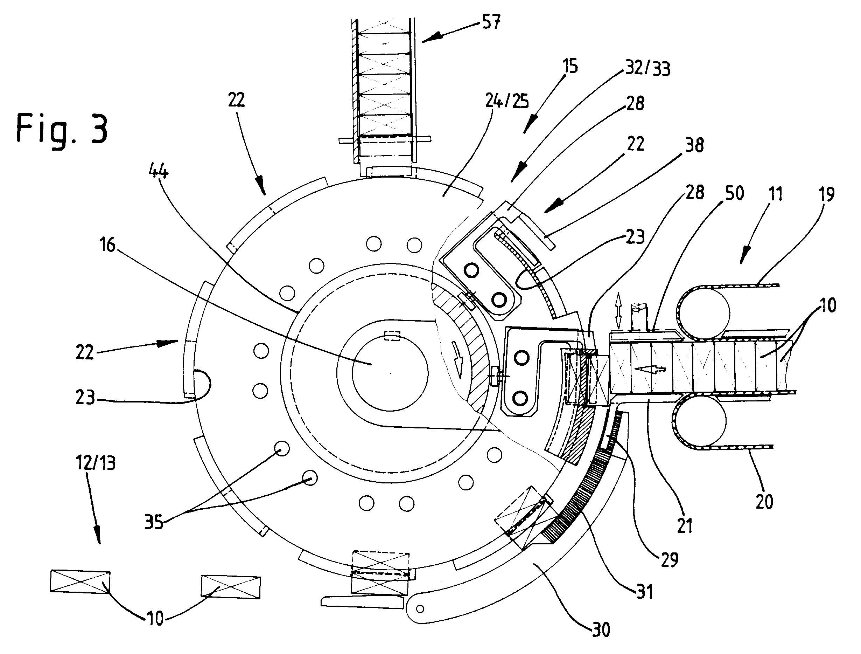

Die beiden vordereren Packungen 10 der Zuförderbahn 11 werden jeweils durch die Verteilertrommel 15 mitgenommen und in Abwärtsrichtung (Uhrzeigersinn) gefördert. Zu diesem Zweck ist die Verteilertrommel 15 mit mehreren, im vorliegenden Falle (Fig. 3) acht Verteilerstationen 22 ausgerüstet. Diese bestehen jeweils aus quergerichteten streifen- bzw. plattenförmigen Traversen 23 mit gewölbtem Querschnitt. Die Traversen 23 sind zugleich Verbindungsorgane zwischen seitlichen Trommelscheiben 24, 25.

In Bereich der Traversen 23 werden die (zwei) Packungen 10a, 10b an den Umfang der Verteilertrommel 15 herangeführt und sodann achsparallel zu den Seiten in entgegengesetzten Richtungen verschoben. Die beiden Packungen 10a, 10b werden durch Oberförderer 19 und Unterförderer 20 gegen in der Mitte der Verteilertrommel 15 angeordnete Stützorgane gefördert. Diese bestehen aus Stützwalzen mit achsparallel gerichteten Drehachsen. Bei dem gezeigten Ausführungsbeispiel sind zwei Gruppen von Stützwalzen vorgesehen, nämlich jeweils zwei Aufnahmewalzen 26 und in Umfangsrichtung daran anschließend zwei Tragwalzen 27. Die Aufnahmewalzen 26 mit größerem Durchmesser bzw. in Radialrichtung weiter nach außen vorstehend als die Tragwalzen 27 sind in Drehrichtung der Verteilertrommel 15 im vorderen Teil der Traverse 23 gelagert, derart, daß die vordere Packung 10a an den beiden parallelen Aufnahmewalzen 26 Anlage erhält. Bei fortgesetzter Drehbewegung der Verteilertrommel 15 laufen die Aufnahmewalzen 26 an der vornliegenden Fläche (Vorderseite oder Rückseite) der Packung 10 ab, bis die Tragwalzen 27 in den Bereich der Packungen 10a, 10b gelangen. In dieser Position kommen Mitnehmer bzw. ein gemeinsamer Mitnehmer 28 an der Oberseite (im Bereich der Zuförderbahn 11) der Packungen 10a, 10b zur Anlage. Diese werden nun durch die Verteilertrommel 15 mitgenommen. Zwängungen im Bereich der Packungen 10a, 10b werden dadurch vermieden, daß die Tragwalzen 27 einen geringeren Durchmesser aufweisen bzw. etwa weiter nach innen zurückgesetzt sind als die Aufnahmewalzen 26.

Die Brücke 21 endet mit einem solchen Abstand von der Traverse 23, daß die beiden vorderen Packungen 10a, 10b am Ende der Brücke 21 vorbeibewegt und nachfolgend durch einen nach unten gerichteten Führungsschenkel 29 derselben gehalten werden. Hieran anschließend erstreckt sich eine kreisbogenförmige, feststehende Außenführung 30, die an der Innenseite einen für die gleitende Anlage der Packung 10a, 10b schonenden Belag aufweist, im vorliegenden Falle einen Bürstenbelag 31.

Im Bereich der Außenführung 30 findet die achsparallel gerichtete Seitwärtsverschiebung der Packungen 10a, 10b statt, und zwar in entgengesetzten Richtungen. Zu diesem Zweck sind jeder Verteilerstation 22 zwei Schieberorgane zugeordnet, nämlich winkelförmige Querschieber 32 und 33. Diese sind im Querschnitt C-förmig ausgebildet und mit einem Führungsstück 34 jeweils auf zwei gemeinsamen, achsparallel gerichteten Tragstangen 35 verschiebbar gelagert. Die Tragstangen 35 sind mit ihren Enden in den Trommelscheiben 24, 25 befestigt.

Jeder Querschieber 32, 33 ist am Ende eines abgewinkelten Tragstegs 36 mit einem einseitig abstehenden, quer zur Trommelachse gerichteten Mitnehmer 37, 38 versehen. Diese erstrecken sich annähernd in Umfangsrichtung der Verteilertrommel 15 in unterschiedlichen radialen Ebenen. Der radial innenliegende Mitnehmer 37 ist der innenliegenden Packung 10a und der mit Abstand hiervon radial außenliegende Mitnehmer 38 der außenliegenden Packung 10b zugeordnet.

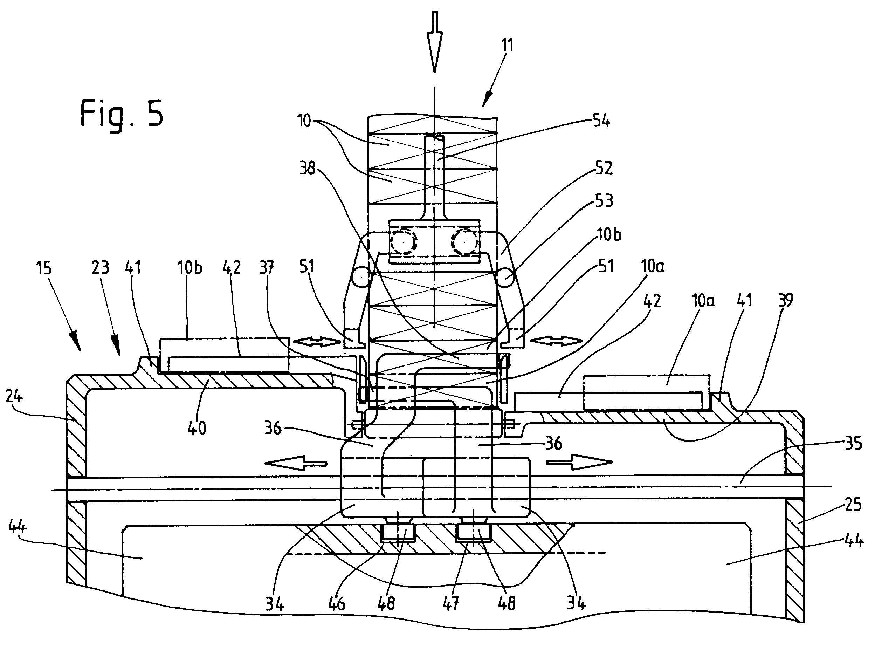

Nach Aufnahme der beiden Packungen 10a, 10b in einer Verteilerstation 22 werden die Querschieber 32, 33 auf den Tragstangen 35 in entgegengesetzten achsparallelen Richtungen bewegt. Bei der Darstellung gemäß Fig. 5 wird die innenliegende Packung 10a nach rechts und die außenliegende Packung 10b nach links bewegt. Deren radialer Abstand von der Trommelachse wird dabei nicht verändert. Die Packungen 10a, 10b werden auf Tragplatten 39, 40 am Umfang der Verteilertrommel 15 geschoben, die Teile der Traverse 23 sind. Die Tragplatten 39, 40 sind in radial versetzten Ebenen angeordnet, nämlich jeweils ausgerichtet auf die versetzt liegenden Packungen 10a, 10b. Die innenliegende Packung 10a wird von den Tragwalzen 27 abgeschoben auf die zugeordnete Tragplatte 39 und die äußere Packung 10b von der inneren Packung 10a auf die Tragplatte 40.

In den seitlichen Endpositionen liegen die Packungen 10a, 10b jeweils an einem Außenanschlag 41 an. In Umfangsrichtung ist auf der einen Seite ein Anschlagsteg 42 und gegenüberliegend ein Aufsatzstück 43 auf der Außenseite der Traverse 23 zur Begrenzung einer Aufnahme für die Packung 10a, 10b angeordnet. In dieser Stellung, nämlich am Außenanschlag 41, werden die Packungen 10a, 10b an der Unterseite der Verteilertrommel 15 an die Abförderbahn 12, 13 übergeben, im vorliegenden Falle durch Ablegen infolge Eigengewichts auf im einzelnen nicht dargestellten Förderern, z, B. Förderbändern.

Die Bewegung der Querschieber 32, 33 wird über Kurven gesteuert. Bei dem gezeigten Ausführungsbeispiel ist im Inneren der Verteilertrommel 15, konzentrisch zu dieser, eine feststehende, also nicht mitdrehende, Kurventrommel 44 gelagert. An der Kurventrommel 44 sind die Achszapfen 16, 17 angeordnet, wobei der Achszapfen 16 unmittelbar unverdrehbar im Maschinengestell gelagert ist. Der Achszapfen 17 dient als Lager für die Trommelscheibe 25 und das Antriebszahnrad 18.

Die Kurventrommel 44 ist mit zwei durch Nuten gebildeten Steuerkurven 46 und 47 versehen, die sich längs des Umfangs erstrecken. In diese treten Tastrollen 48 ein, die jeweils mit einem Querschieber 32, 33, nämlich mit deren Führungsstück 34, verbunden sind. Durch die Gestaltung der Steuerkurven 46, 47 wird sichergestellt, daß die Querschieber 32, 33 während der Umdrehung der Verteilertrommel 15 aus der mittigen Ausgangsstellung (Fig. 4, Fig. 5) in eine seitliche Position unter Mitnahme der Packungen 10a, 10b bewegbar sind.

Die die Querschieber 32, 33 haltenden Tragstangen 35 sind ebenfalls innerhalb der Verteilertrommel 15 angeordnet, nämlich zwischen dem durch die Traversen 23 gebildeten Außenmantel und der Kurventrommel 44. Zwischen den benachbarten Traversen 23 ist jeweils ein über die Breite der Verteilertrommel 15 durchgehender Spalt 49 gebildet. Durch diesen treten die Halteorgane (Tragsteg 36) der Querschieber 32, 33 hindurch an die Außenseite der Verteilertrommel 15.

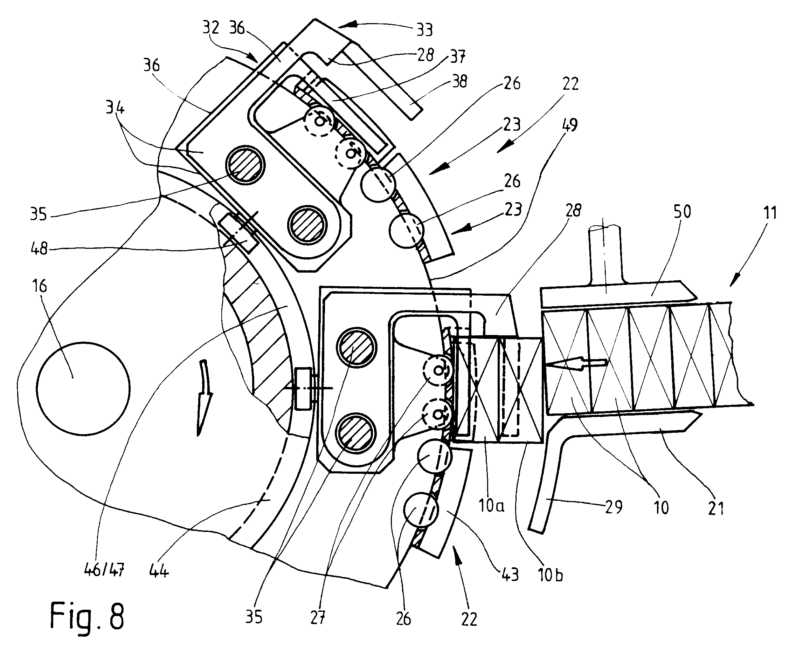

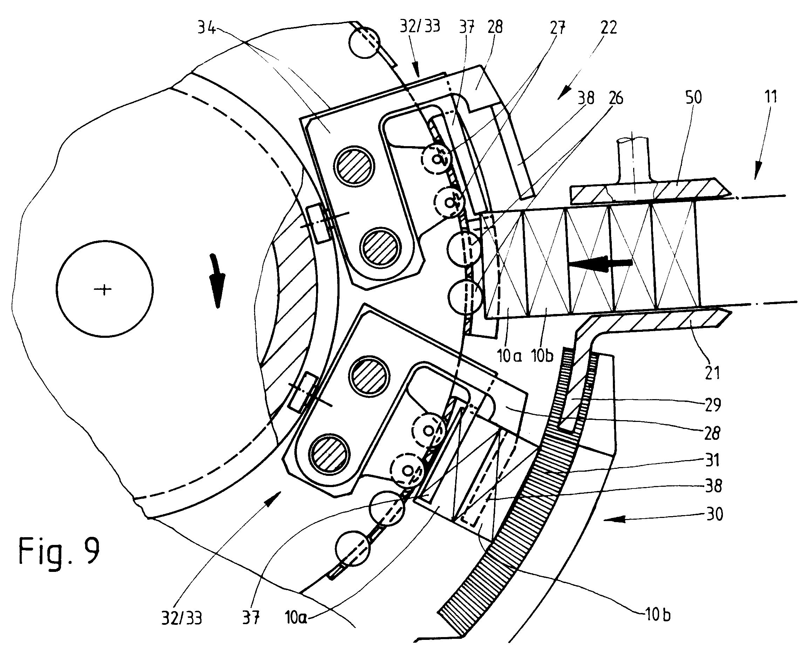

Um die geschilderte Übernahme von jeweils zwei Packungen 10a, 10b durch die Verteilertrommel 15 zu gewährleisten, wird die nachfolgende Dichtlage der Packungen 10 im Bereich der Zuförderbahn 11 zeitweilig angehalten. Bei dem gezeigten Ausführungsbeispiel ist zu diesem Zweck oberhalb der feststehenden Brücke 21 ein Festhalteorgan angebracht. Dieses ist bei dem gezeigten Ausführungsbeispiel (Fig. 3, 8 und 9) als Andrückstempel 50 oberhalb der Reihe der Packungen 10 angeordnet. Nach Anlage der Packung 10a an den (größeren) Aufnahmewalzen 26 wird der Andrückstempel 50 abgesenkt, so daß die vorderen Packungen 10 im Bereich der Brücke 21 gegen diese gedrückt und dadurch angehalten werden. Nachfolgend gelangen die Tragwalzen 27 in den Bereich der Packungen 10a, 10b, so daß ein erforderlicher Zwischenraum gegenüber den nachfolgenden, festgehalteten Packungen 10 entsteht.

Weiterhin ist im Bereich der Zuförderbahn 11 ein Stoppmechanismus für die Dichtreihe der Packungen 10 angeordnet. Dieser besteht bei dem vorliegenden Ausführungsbeispiel aus seitlich in die Zuförderbahn 11 einführbaren Anschlägen 51. Diese treten bei notwendigen Unterbrechungen der Zuführung von Packungen 10 in die Zuförderbahn 11 ein, derart, daß die Packungsförderung im Bereich der Brücke 21 unterbrochen ist. Die Anschläge 51 sind im vorliegenden Falle an Schwenkarmen 52 angebracht, die um ein Drehlager 53 schwenkbar und durch einen gemeinsamen Stößel 54 betätigbar sind.

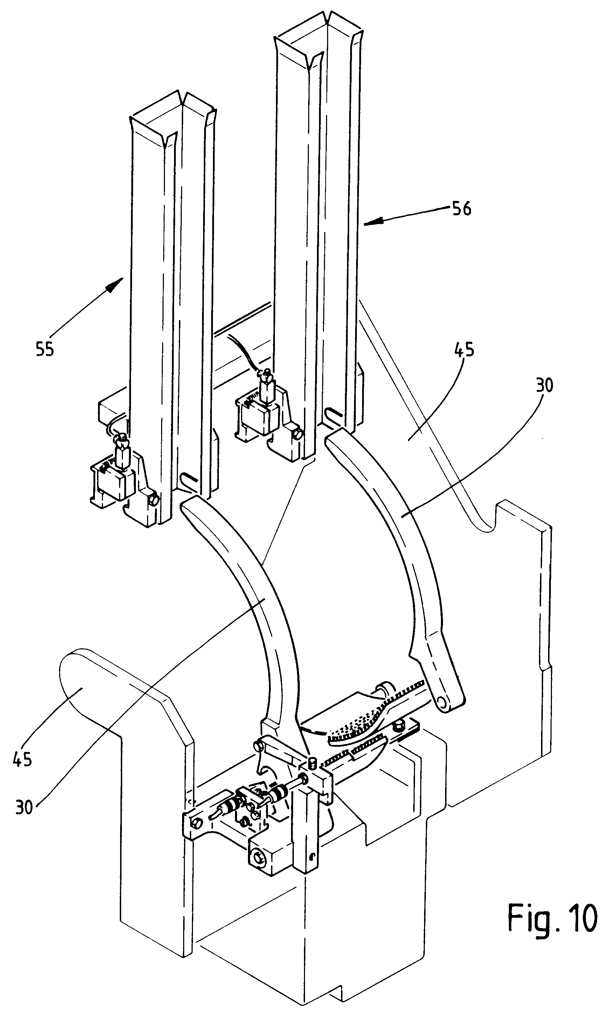

Eine Unterbrechnung der Zuführung von Packungen 10 über die Zuförderbahn 11 kann beispielsweise dann erforderlich sein, wenn fehlerhafte Packungen nach Beseitigung des Mangels über einen bzw. zwei Nachlegeschächte 55, 56 in den Förderprozeß eingeführt werden. Die Nachlegeschächte 55, 56 werden von Hand beschickt. Sie enden an der Oberseite der Verteilertrommel 15 in einer Position, die eine lagegerechte Übergabe der Packungen 10 an die Verteilertrommel 15 jeweils in der den Abförderbahnen 12, 13 entsprechenden Relativstellung ermöglicht (Fig. 10).

Ist der Verteilertrommel 15 lediglich ein einzelner, mittig angeordneter Nachlegeschacht 57 zugeordnet (Fig. 4), werden die Zigaretten-Packungen diesem Nachlegeschacht 57 in der im Zusammenhang mit der Zuführung über die Zuförderbahn 11 beschriebenen Weise entnommen und aus der mittigen Position zu den Seiten hin verteilt. An den unteren Enden der Nachlegeschächte 55, 56, 57 sind Stopper 58 angeordnet, die in den Nachlegeschacht 55, 56, 57 ragen und für die Entleerung derselben zurückbewegt werden.

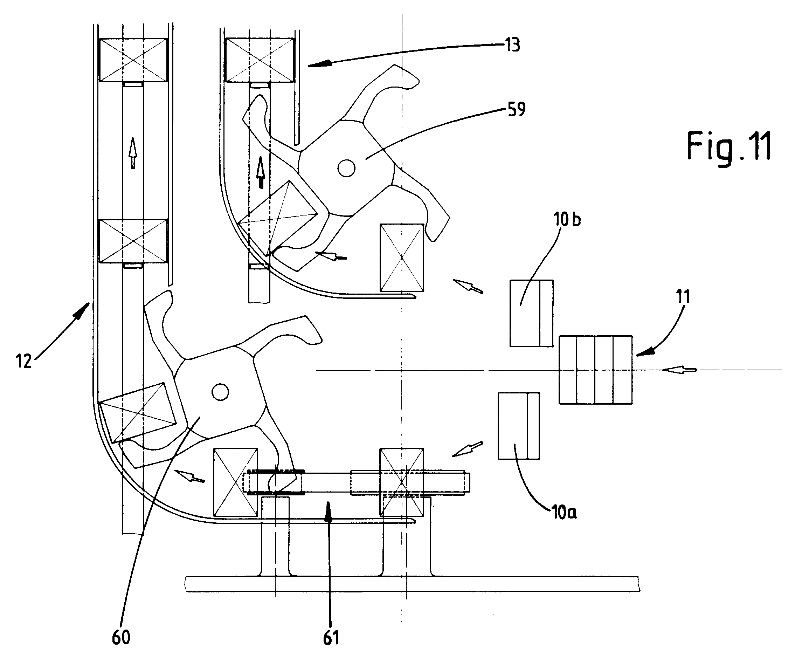

Fig. 11 zeigt eine Alternative in bezug auf die Gestaltung der Abförderbahnen 12, 13. Diese sind hier mit einer Umlenkung gestaltet, derart, daß zunächst ein erster Teil der Abförderbahn 12, 13 in Richtung der Zuförderbahn 11 verläuft und danach der weitere Teil quer hierzu. Die im unteren Bereich aus der Verteilertrommel 15 austretenden Packungen 10a, 10b werden durch Umlenkräder 59, 60 in die abgewinkelten bzw. querverlaufenden Teile der Abförderbahnen 12, 13 eingeführt. Diese Umlenkräder entsprechen im Aufbau und in der Arbeitsweise dem in der DE-PS 31 17 859 als Förderkreuz bezeichneten Umlenkrad.

Da aufgrund der geometrischen Verhältnisse das Umlenkrad 60 der außenliegenden Abförderbahn 12 einen größeren Abstand von der Verteilertrommel 15 aufweist, ist ein Zwischenförderer 61 in diesem Bereich angeordnet, der die Packungen 10a aus dem Bereich der Verteilertrommel 15 dem Umlenkrad 60 zuführt. Das Umlenkrad 59 übernimmt die Packungen 10b unmittelbar von der Verteilertrommel 15. Der Zwischenförderer 61 ist als Förderband ausgebildet, ggf. mit Mitnehmern für die Packungen 10.

## Patentansprüche

1. Verfahren zum Überführen von in einer fortlaufenden Reihe auf einer Zuförderbahn (11) zugeförderten Gegenständen (10), insbesondere Zigaretten-Packungen, in mehrere, insbesondere zwei Abförderbahnen (12, 13), wobei die ankommenden Gegenstände (10) während vorzugsweise kontinuierlichen Transports längs einer kreisbogenförmigen, insbesondere etwa viertelkreisförmigen Verteilerbahn (14) durch unterschiedliches Verschieben quer zur Zuförderbahn (11) den zugeordneten Abförderbahnen (12, 13) zugeführt werden, und wobei die Gegenstände (10) während des Transports längs der Verteilerbahn (14) zugleich seitwärts bewegt werden unter Ausrichtung auf die entsprechende Abförderbahn (12), **dadurch gekennzeichnet,** daß gleichzeitig mehrere, insbesondere zwei Gegenstände (10) der Zuförderbahn (11) entnommen und im Bereich der kreisbogenförmigen Verteilerbahn (14) in entgegengesetzten Richtungen quer bewegt werden bis zur Ausrichtung auf die Abförderbahnen (12, 13).

2. Verfahren nach Anspruch 1, dadurch gekennzeichnet, daß die gleichzeitig der Zuförderbahn (11) entnommenen Gegenstände (10) in radialer Richtung - bezogen auf die kreisbogenförmige Verteilerbahn (14) - hintereinanderliegen.

3. Verfahren nach Anspruch 1 oder 2, dadurch gekennzeichnet, daß die Gegenstände (10) auf den Abförderbahnen (12, 13) relativ zu der Zuförderbahn (11) in der Höhe parallel versetzt, insbesondere tieferliegend, abgefördert werden.

4. Verfahren nach einem oder mehreren der Ansprüche 1 bis 3, dadurch gekennzeichnet, daß die vorzugsweise quaderförmigen Gegenstände (10) während der Aufteilung auf die Abförderbahnen (12, 13) zugleich gewendet werden, insbesondere aus einer aufrechten Position im Bereich der Zuförderbahn (11) in eine liegende Stellung im Bereich der Abförderbahnen (12, 13).

5. Vorrichtung zum Aufteilen von Gegenständen (10), insbesondere Zigaretten-Packungen, einer gemeinsamen Zuförderbahn (11) auf mehrere, insbesondere zwei im Abstand voneinander verlaufende, vorzugsweise parallele Abförderbahnen (12, 13), mit einer vorzugsweise kontinuierlich umlaufenden Verteilertrommel (15) als Verteilerförderer, wobei die Gegenstände (10) auf der Zuförderbahn (11) an den Umfang der Verteilertrommel (15) heranförderbar und auf dessen Umfang während der Drehbewegung derselben in achsparalleler Richtung verschiebbar sind, insbesondere abwechselnd in gegenläufiger Richtung, dadurch gekennzeichnet, daß die Verteilertrommel (15) Mittel aufweist zur Aufnahme von zwei in Radialrichtung nebeneinanderliegenden Gegenständen (10a, 10b).

6. Vorrichtung nach Anspruch 5, dadurch gekennzeichnet, daß die Verteilertrommel (15) mehrere in gleichen Umfangsabständen voneinander angeordnete Verteilerstationen (22) aufweist, je zur Aufnahme eines oder mehrerer Gegenstände (10; 10a, 10b), wobei jeder Verteilerstation (22) Schieberorgane für die Querverschiebung der Gegenungen (10; 10a, 10b) zugeordnet sind, insbesondere zwei in entgegengesetzter Richtung bewegbare, je einem Gegenstand (10a, 10b) zugeordnete Querschieber (32, 33).

7. Vorrichtung nach Anspruch 5 oder 6, dadurch gekennzeichnet, daß die Gegenstände (10) durch die Zuförderbahn (11) etwa im Bereich der horizontalen Mittelebene der Verteilertrommel (15) dieser zuführbar sind, wobei nach Erfassen von vorzugsweise zwei Gegenständen (10a, 10b) durch Mitnehmer (28) der Verteilertrommel (15) die nachfolgenden Gegenstände (10) der Zuförderbahn (11) fixierbar sind, vorzugsweise unter Bildung eines geringfügigen Abstands gegenüber den von der Verteilertrommel (15) aufgenommenen Gegenständen (10a, 10b).

8. Vorrichtung nach Anspruch 7 sowie einem oder mehreren der weiteren Ansprüche, dadurch gekennzeichnet, daß die Gegenstände (10) durch die Zuförderbahn (11) gegen eine relativ zur Verteilertrommel (15) bewegbare Ablagefläche förderbar sind, insbesondere gegen drehbare Aufnahmewalzen (26), die eine rollende Bewegung entlang der Anlagefläche der Gegenstände (10) ermöglicht bis zur Mitnahme durch die Verteilertrommel (15).

9. Vorrichtung nach Anspruch 8, dadurch gekennzeichnet, daß jede Verteilerstation (22) im mittleren Bereich der Verteilertrommel (15) zwei Gruppen von Walzen aufweist, nämlich Aufnahmewalzen (26) und gegenüber diesen in Radialrichtung nach innen zurückgesetzte Tragwalzen (27), wobei die Gegenstände bzw. der vordere Gegenstand (10a) während der Mitnahme durch die Verteilertrommel (15) an den Tragwalzen (27) anliegt.

10. Vorrichtung nach Anspruch 5 sowie einem oder mehreren der weiteren Ansprüche, dadurch gekennzeichnet, daß die zwei in Radialrichtung nebeneinanderliegend durch die Verteilertrommel (15) mitgenommenen Gegenstände (10a, 10b) während der Drehbewegung ohne Veränderung des radialen Abstandes von der Trommelachse querbewegbar sind, insbesondere auf jeder Verteilerstation (22) zugeordneten Tragplatten (39, 40), die in radial versetzten Ebenen angeordnet sind.

11. Vorrichtung nach Anspruch 10 sowie einem oder mehreren der weiteren Ansprüche, dadurch gekennzeichnet, daß die jedem Gegenstand (10a, 10b) im Bereich einer Verteilerstation (22) zugeordneten Tragplatten (39, 40) Teil einer quergerichteten Traverse (23) sind, an der auch die Aufnahmewalzen (26) und Tragwalzen (27) gelagert sind und die mit Abstand in Umfangsrichtung als Verbindung zweier seitlicher Trommelscheiben (24, 25) dienen.

12. Vorrichtung nach Anspruch 5 sowie einem oder mehreren der weiteren Ansprüche, dadurch gekennzeichnet, daß jeder Verteilerstation (22) zwei vorzugsweise aus einer mittigen Stellung in entgegengesetzten Richtungen (zu den Seiten der Verteilertrommel 15) bewegbare Querschieber (32, 33) zugeordnet sind, je mit einem Mitnehmer (37, 38) zum Erfassen eines Gegenstands (10) an einer Seitenfläche.

13. Vorrichtung nach Anspruch 12, dadurch gekennzeichnet, daß die Querschieber (32, 33) jeweils mit einem Führungsstück (34) auf zwei im Abstand voneinander angeordneten Tragstangen (35) gelagert und auf diesen verschiebbar sind, vorzugsweise durch an jedem Führungsstück (34) angebrachte Tastrollen (48), die in Steuerkurven (46, 47) eintreten.

14. Vorrichtung nach Anspruch 13 sowie einem oder mehreren der weiteren Ansprüche, dadurch gekennzeichnet, daß die Steuerkurven (46, 47) auf einer innerhalb der Verteilertrommel (15) angeordneten, ortsfesten Kurventrommel (44) angeordnet sind.

15. Vorrichtung nach Anspruch 13 oder 14, dadurch gekennzeichnet, daS die Tragstangen (35) als Halteorgane für die Querschieber (32, 33) innerhalb der Verteilertrommel (15) angeordnet und die Führungsstücke (34) über Tragstege (36), die durch Spalte (49) zwischen benachbarten Verteilerstationen (22) hindurchtreten, mit den Mitnehmern (37, 38) verbunden sind.

16. Vorrichtung nach Anspruch 5 sowie einem oder mehreren der weiteren Ansprüche, dadurch gekennzeichnet, daß der Verteilertrommel (15) ein mittig angeordneter Nachlegeschacht (57) für zusätzlich einzuführende Gegenstände (10) oder zwei im Abstand voneinander angeordnete Nachlegeschächte (55, 56) zugeordnet sind, wobei der einzelne Nachlegeschacht (57) an der Oberseite der Verteilertrommel (15) im Bereich der Aufnahmewalzen (26) bzw. Tragwalzen (27) angeordnet ist, während zwei Nachlegeschächte (55, 56) sich oberhalb der Tragplatten (39, 40) in einer der Endstellung der Gegenstände (10a, 10b) entsprechenden Position erstrecken.

## Claims

1. Process for transferring articles (10), especially cigarette packs, fed in a continuous series on a feed track (11), onto several, especially two discharge tracks (12, 13), during preferably continuous transport along a distributor track (14) in the form of an arc of a circle, especially approximately in the form of a quarter circle, the oncoming articles (10) being fed to the associated discharge tracks (12, 13) as a result of a differing shift transverse relative to the feed track (11), and, during transport along the distributor track (14), the articles (10) being simultaneously moved sideways, coming into alignment with the corresponding discharge track (12), characterized in that several, especially two articles (10) are extracted simultaneously from the feed track (11) and, in the region of the distributor track (14) in the form of an arc of a circle, are moved transversely in opposite directions, until they come into alignment with the discharge tracks (12, 13).

2. Process according to Claim 1, characterized in that the articles (10) extracted simultaneously from the feed track (11) lie in succession in the radial direction in relation to the distributor track (14) in the form of an arc of a circle.

3. Process according to Claim 1 or 2, characterized in that the articles (10) on the discharge tracks (12, 13) are discharged, relative to the feed track (11), offset and parallel in terms of height, especially lower than the latter.

4. Process according to one or more of Claims 1 to 3, characterized in that the preferably cuboid articles (10), while being allocated to the discharge tracks (12, 13), are at the same time turned, especially out of a vertical position in the region of the feed track (11) into a horizontal position in the region of the discharge tracks (12, 13).

5. Apparatus for allocating articles (10), especially cigarette packs, of a common feed track (11) to several, especially two preferably parallel discharge tracks (12, 13) extending at a distance from one another, having a preferably continuously rotating distributor drum (15) as distributor conveyor, the articles (10) on the feed track (11) being able to be conveyed to the circumference of the distributor drum (15) and, during the rotational movement of the latter, shifted on its circumference in an axis-parallel direction, especially alternately in opposite directions, characterized in that the distributor drum (15) has means for receiving two articles (10a, 10b) located next to one another in the radial direction.

6. Apparatus according to Claim 5, characterized in that the distributor drum (15) has several distributor stations (22) arranged at equal circumferential distances from one another and each receiving one or more articles (10; 10a, 10b), each distributor station (22) being assigned slide members for the transverse shifting of the articles (10; 10a, 10b), especially two cross slides (32,33) movable in opposite directions and each assigned to an article (10a, 10b).

7. Apparatus according to Claim 5 or 6, characterized in that the articles (10) can be fed by the feed track (11) to the distributor drum (15) approximately in the region of the horizontal mid-plane of the latter and after preferably two articles (10a, 10b) have been grasped by take-up devices (28) of the distributor drum (15) the following articles (10) of the feed track (11) can be fixed, preferably to form a small clearance relative to the articles (10a, 10b) received by the distributor drum (15).

8. Apparatus according to Claim 7 and one or more of the further claims, characterized in that the articles (10) can be conveyed by the feed track (11) up against a resting surface movable relative to the distributor drum (15) especially up against rotatable receiving rollers (26), allowing a rolling movement along the bearing surface of the articles (10) until they are taken up by the distributor drum (15).

9. Apparatus according to Claim 8, characterized in that, in the middle region of the distributor drum (15), each distributor station (22) has two groups of rollers, particularly receiving rollers (26), and support rollers (27) set back inwards relative to these in the radial direction, the articles or the front article (10a) resting against the support rollers (27) during the take-up by the distributor drum (15).

10. Apparatus according to Claim 5 and one or more of the further claims, characterized in that, during the rotational movement, the two articles (10a, 10b) taken up by the distributor drum (15) so as to be located next to one another in the radial direction are movable transversely, without any change of the radial distance from the drum axis, especially on support plates (39, 40) assigned to each distributor station (22) and arranged in radially offset planes.

11. Apparatus according to Claim 10 and one or more of the further claims, characterized in that the support plates (39, 40) assigned to each article (10a, 10b) in the region of a distributor station (22) are part of a transversely directed crossmember (23), on which the receiving rollers (26) and support rollers (27) are also mounted and which serve to connect two lateral drum discs (24, 25) at a distance from one another in the circumferential direction.

12. Apparatus according to Claim 5 and one or more of the further claims, characterized in that each distributor station (22) is assigned two cross slides (32, 33) preferably movable from a central position in opposite directions (towards the sides of the distributor drum 15), each with a take-up device (37, 38) for grasping an article (10) on one side face.

13. Apparatus according to Claim 12, characterized in that the cross slides (32, 33) are each mounted by means of a guide piece (34) on two supporting rods (35) arranged at a distance from one another and can be shifted along these, preferably by means of tracer rollers (48) which are attached to each guide piece (34) and which enter control cams (46, 47).

14. Apparatus according to Claim 13 and one or more of the further claims, characterized in that the control cams (46, 47) are arranged on a fixedly located cam drum (44) arranged within the distributor drum (15).

15. Apparatus according to Claims 13 or 14, characterized in that the supporting rods (35) are arranged within the distributor drum (15) as holding members for the cross slides (32, 33), and the guide pieces (34) are connected to the take-up devices (37, 38) via supporting webs (36) which pass through gaps (49) between adjacent distributor stations (22).

16. Apparatus according to Claim 5 and one or more of the further claims, characterized in that the distributor drum (15) is assigned a centrally arranged replenishing shaft (57) for articles (10) to be introduced additionally or two replenishing shafts (55, 56) arranged at a distance from one another, the individual replenishing shaft (57) being arranged on the top side of the distributor drum (15) in the region of the receiving rollers (26) and support rollers (27), whilst two replenishing shafts (55, 56) extend above the support plates (39, 40) in a position corresponding to the end position of the articles (10a, 10b).

## Revendications

1. Procédé pour transférer des objets (10), en particulier des paquets de cigarettes, transportés en une rangée continue sur une bande de transport (11), sur plusieurs, en particulier deux, bandes de transport d'évacuation (12, 13), les objets (10) arrivant, pendant le transport, de préférence continu, le long d'une bande de répartition (14) en arc de cercle, en particulier à peu près en quart de cercle, sont amenés aux bandes de transport d'évacuation (12, 13) associées au moyen d'un déplacement différent, transversalement par rapport à la bande de transport (11), les objets (10) étant déplacés, en même temps, latéralement pendant le transport le long de la bande de répartition (14), au moyen d'un alignement sur la bande de transport d'évacuation (12) correspondante, caractérisé en ce que, en même temps, plusieurs, en particulier deux, objets (10) de la bande de transport (11) sont pris et déplacés transversalement dans des directions opposées, dans la zone de la bande de répartition (14) en arc de cercle, jusqu'à ce qu'ils soient alignés sur les bandes de transport d'évacuation (12, 13).

2. Procédé selon la revendication 1, caractérisé en ce que les objets (10) pris simultanément de la bande de transport (11) sont disposés les uns derrière les autres dans la direction radiale - par rapport à la bande de répartition (14) en arc de cercle.

3. Procédé selon la revendication 1 ou 2, caractérisé en ce que les objets (10) sont transportés, à l'évacuation sur les bandes de transport d'évacuation (12, 13), décalés parallèlement en hauteur par rapport à la bande de transport (11), en particulier situés plus bas.

4. Procédé selon l'une ou plusieurs des revendications 1 à 3, caractérisé en ce que les objets (10), de préférence parallélépipédiques, sont tournés simultanément au cours de la répartition sur les bandes de transport d'évacuation (12, 13), en particulier depuis une position relevée dans la zone de la bande de transport (11) dans une position horizontale dans la zone des bandes de transport d'évacuation (12, 13).

5. Dispositif pour répartir des objets (10), en particulier des paquets de cigarettes, depuis une bande de transport (11) commune sur plusieurs, en particulier deux, bandes de transport d'évacuation (12, 13), de préférence parallèles, évoluant à distance l'une de l'autre, avec un tambour de répartition (15) circulant, de préférence de manière continue, comme transporteur de répartition, les objets (10) pouvant être transportés sur la bande de transport (11) en s'approchant de la périphérie du tambour de répartition (15) et sont déplaçables sur sa périphérie, pendant le mouvement de rotation de celui-ci, dans la direction parallèle à l'axe, en particulier alternativement dans la direction opposée, caractérisé en ce que le tambour de répartition (15) présente des milieux permettant de loger deux objets (10a, 10b), se trouvant l'un à côté de l'autre dans la direction radiale.

6. Dispositif selon la revendication 5, caractérisé en ce que le tambour de répartition (15) présente plusieurs postes de répartition (22) disposés l'un par rapport à l'autre à égales distances périphériques, chacun pour loger un ou plusieurs objets (10; 10a, 10b), des organes poussoirs étant associés, pour le déplacement transversal des objets (10; 10a, 10b) à chaque poste de répartition (22), en particulier deux poussoirs transversaux (32, 33) associés à chaque objet (10a, 10b), déplaçables dans la direction opposée.

7. Dispositif selon la revendication 5 ou 6, caractérisé en ce que les objets (10) peuvent être transportés au moyen de la bande de transport (11) à peu près dans la zone du plan médian horizontal du tambour de répartition (15) de ceux-ci, après avoir saisi des, de préférence deux, objets (10a, 10b) au moyen de l'organe d'entraînement (28) du tambour de répartition (15), les objets (10) suivants de la bande de transport (11) pouvant être fixés, de préférence en formant une faible distance par rapport aux objets (10a, 10b) pris par le tambour de répartition (15).

8. Dispositif selon la revendication 7, ainsi qu'une ou plusieurs des autres revendications, caractérisé en ce que les objets (10) peuvent être transportés au moyen de la bande de transport (11) contre une surface de réception, déplaçable par rapport au tambour de répartition (15), en particulier contre des rouleaux de logement (26) rotatifs, qui permet un mouvement de roulement le long de la surface de réception des objets (10) jusqu'à ce qu'ils soient entraînés par le tambour de répartition (15).

9. Dispositif selon la revendication 8, caractérisé en ce que chaque poste de répartition (22) présente, dans la zone médiane du tambour de répartition (15), deux groupes de rouleaux, notamment de rouleaux de logement (26) et, en face de ces derniers, dans la direction radiale des rouleaux-support (27) retournés vers l'intérieur, les objets, ou l'objet antérieur (10a), reposant, pendant l'entraînement au moyen du tambour de répartition (15), sur les rouleaux-support (27).

10. Dispositif selon la revendication 5, ainsi que l'une ou plusieurs des autres revendications, caractérisé en ce que les deux objets (10a, 10b), se trouvant l'un à côté de l'autre dans la direction radiale et saisis par le tambour de répartition (15) sont déplacés transversalement, pendant le mouvement de rotation, sans changement de la distance radiale à l'axe de tambour, en particulier sur des plaques-support (39, 40) associées à chaque poste de répartition (22) et disposées dans des plans décalés radialement.

11. Dispositif selon la revendication 10, ainsi que l'une ou plusieurs des autres revendications, caractérisé en ce que les plaques-support (39, 40), associées à chaque objet (10a, 10b) dans la zone d'un poste de répartition (22), sont une partie d'une traverse (23) dirigée transversalement, traverse sur laquelle les rouleaux de logement (26) et les rouleaux-support (27) sont également montés à rotation, et qui servent de liaison, à distance dans la direction périphérique, aux deux disques de tambour (24, 25) latéraux.

12. Dispositif selon la revendication 5, ainsi que l'une ou plusieurs des autres revendications, caractérisé en ce qu'à chaque poste de répartition (22) sont associés deux poussoirs transversaux (32, 33), déplaçables, de préférence, depuis une position médiane dans des directions opposées (vers les côtés du tambour de répartition 15), chaque poussoir étant pourvu d'un organe d'entraînement (37, 38) pour saisir un objet (10) sur une face latérale.

13. Dispositif selon la revendication 12, caractérisé en ce que les poussoirs transversaux (32, 33) sont montés à rotation, chacun avec une pièce de guidage (34), sur deux barres-support (35) disposées à distance l'une de l'autre et sont déplaçables sur celles-ci, de préférence au moyen de galets palpeurs (48), montés sur chaque pièce de guidage (34), qui pénètrent dans des cames de commande (46,47).

14. Dispositif selon la revendication 13, ainsi que l'une ou plusieurs des autres revendications, caractérisé en ce que les cames de commande (46, 47) sont disposées sur une came cylindrique (44) localement fixe, disposée à l'intérieur du tambour de répartition (15).

15. Dispositif selon la revendication 13 ou 14, caractérisé en ce que les barre's-support (35), réalisés sous forme d'organes-support pour les poussoirs transversaux (32, 33), sont disposées à l'intérieur du tambour de répartition (15) et les pièces de guidage (34) sont reliées, par l'intermédiaire de nervures-support (36) passant au travers d'interstices (49) situés entre les stations de répartition (22) voisines, aux organes d'entraînement (37, 38).

16. Dispositif selon la revendication 5, ainsi que l'une ou plusieurs des autres revendications, caractérisé en ce qu'un puits d'alimentation (57), disposé centralement, destiné à des objets (10) devant être introduits en plus, ou deux puits d'alimentation (55, 56), disposés à distance l'un de l'autre, sont associés au tambour de répartition (15), le puits d'alimentation (57) respectif étant disposé sur la face supérieure du tambour de répartition (15) dans la zone des rouleaux de logement (26), ou des rouleaux-support (27), tandis que deux puits d'alimentation (55, 56) s'étendent au-dessus des plaques-support (39, 40) dans une position correspondant à la position finale des objets (10a, 10b).
